# EUROPEAN PATENT APPLICATION

(11) **EP 3 195 724 A2**
(43) Date of publication of application: **26.07.2017**
(21) Application number: 16178437.6
(22) Date of filing: 07.07.2016
(51) Int. Cl.: A01K 15/02

(54) **PET TOY**

(30) Priority: 25.01.2016 CN 201620071726 U
(71) Applicant: JiangSu Zhongheng Pet Articles Joint-Stock Co., Ltd., Yancheng City, Jiangsu 224055 (CN)
(72) Inventor: Bin, QIU, Yancheng City, Jiangsu Province, 224055 (CN)
(74) Representative: 2K Patentanwälte Blasberg Kewitz & Reichel

(57) **Abstract**

The invention relates to a pet toy, belonging to the technical field of the pet toys. A pet toy is disclosed which is provided with a center turnplate, wherein the center turnplate is radially equipped with a rotating arm (4) outward in a fixed way, the lower portion of the terminal of the rotating arm (4) is connected with a thread rope (1); the position of the lower portion of the housing of the pet toy corresponding to the vertical direction of the terminal treading track of the rotating arm is provided with at least one arc-shaped slotted hole (5); the center turnplate drives the rotating arm to rotate, the rotating arm (4) drives the thread rope (1) to rotate, and the exposed portion of the thread rope 1 stops rotating and retracts upwards when the thread rope rotates to the terminal of the slotted hole. The pet toy can automatically lead the thread rope to implement corresponding actions of rotation and extension-retraction so as to attract pet's attention to play; the rotation direction and duration of the center turnplate can be automatically controlled via a built-in program; the attention to the pet is so stronger that the pet toy is particularly suitable for pet cats.

## Description

### TECHNICAL FIELD

The invention model relates to a pet toy, belonging to the technical field of the pet toys.

### BACKGROUND ART

With the development of social economy and the acceleration of urbanization process, the independence and individuation of urban resident households and the aging of the population become increasingly prominent. The resident's leisure, consumption and emotional sustenance modes are in diversified development. Pets raised at home are served as partners, rather than keeping a dog for guarding the entrance and keeping a cat for capturing mice as before. For many people, the pet is also a member of the family, following the corresponding increase in the consumption budget of the pets.

The pet toys are now scarce on the pet product market, or even a great many toys for children are used as the pet toys for sale. The toys for cats are fewer. The cats are more easily attracted by the toys like ropes observationally. Such toys on the current market are static. The toy is fixed in one place when used, and then remains immovable. In this way, the cat easily loses interest after playing several times. Or, the toy is pulled by the pet owner's hand to float up and down or sway left and right to attract the pet's attention, which needs the cooperation of the pet owner. But it is inconvenient for people to operate all the time.

### SUMMARY OF THE INVENTION

The invention aims at providing a pet toy, which can automatically lead a thread rope to implement corresponding actions of rotation and extension-retraction so as to attract pet's attention to play.

The invention adopts the technical scheme as follows:

A pet toy is disclosed. The pet toy is provided with a center turnplate, wherein the center turnplate is radially equipped with a rotating arm 4 outward in a fixed way, the lower portion of the terminal of the rotating arm 4 is connected with a thread rope 1; the position of the lower portion of the housing of the pet toy corresponding to the vertical direction of the terminal treading track of the rotating arm 4 is provided with at least one arc-shaped slotted hole 5; the center turnplate drives the rotating arm 4 to rotate, the rotating arm 4 drives the thread rope 1 to rotate, and the exposed portion of the thread rope 1 stops rotating and retracts upwards when the thread rope 1 rotates to the terminal of the slotted hole.

Further, the terminal of the rotating arm 4 is fixedly connected with an upper swaying block 6, the upper swaying block 6 is hinged with a lower swaying block 2, a spring 3 is arranged between the upper swaying block 6 and the lower swaying block 2, a stop block corresponding to the position of the lower swaying block 2 is arranged inside the pet toy, the lower swaying block 2 collides with the stop block when the rotating arm 4 rotates before the arc-shaped slotted hole 5, the lower swaying block 2 rotates along hinge joint, and the spring 3 is released to bounce the thread rope 1 out of the arc-shaped slotted hole 5.

Further, pluralities of arc-shaped slotted holes 5 are provided and arranged at equal angles in the circle direction.

Further, the center turnplate is driven by a motor, and the motor controls the rotation direction and duration via a set program.

Further, the pet toy is fixed in a suspended way.

Further, the pet toy is supported via a support object in the middle of the bottom surface thereof to fix in the suspended way.

A pet toy, the thread rope 1 is an elastic rigid structure and the arc-shaped slotted hole 5 faces upward.

A pet toy, the pet toy is provided with a center turnplate, the center turnplate is radially equipped with a rotating arm outward in a fixed way, and the lower portion of the terminal of the rotating arm is connected with a thread rope; the position of the lower portion of the housing of the pet toy corresponding to the vertical direction of the terminal treading track of the rotating arm is provided with a circular ring hole 7; and the center turnplate drives the rotating arm to rotate, and the rotating arm drives the thread rope to rotate in the circular ring hole 7.

The invention has the beneficial effects as follows:
a) the pet toy automatically lead a thread rope to implement corresponding actions of rotation and extension-retraction so as to attract pet's attention to play.
b) the rotation direction and duration of the center turnplate can be automatically controlled via a built-in program.
c) the attention to the pet is so stronger that the pet toy is particularly suitable for pet cats.

### BRIEF DESCRIPTION OF THE DRAWINGS

Fig. 1 is a three-dimensional structural view of a pet toy of the invention.
Fig. is a front view of the pet toy of the invention.
Fig. 3 is an upward view of the pet toy of the invention.
Fig. 4 is a front sectional view of the pet toy of the invention.
Fig. 5 is a locally amplified diagram of Fig. 4.
Fig. 6 is a schematic diagram of a thread rope, a rotating arm, an upper swaying block, a lower swaying block, a spring and other structures.
Fig. 7 is a locally amplified diagram of Fig. 6.
Fig. 8 is an upward view of the pet toy described in the third embodiment of the invention.
Fig. 9 is a front view of the pet toy described in the third embodiment of the invention.

### DETAILED DESCRIPTION OF THE PREFERRED EMBODIMENTS

The invention will be further described in details by reference to the drawings and the embodiments hereinafter.

### First Embodiment:

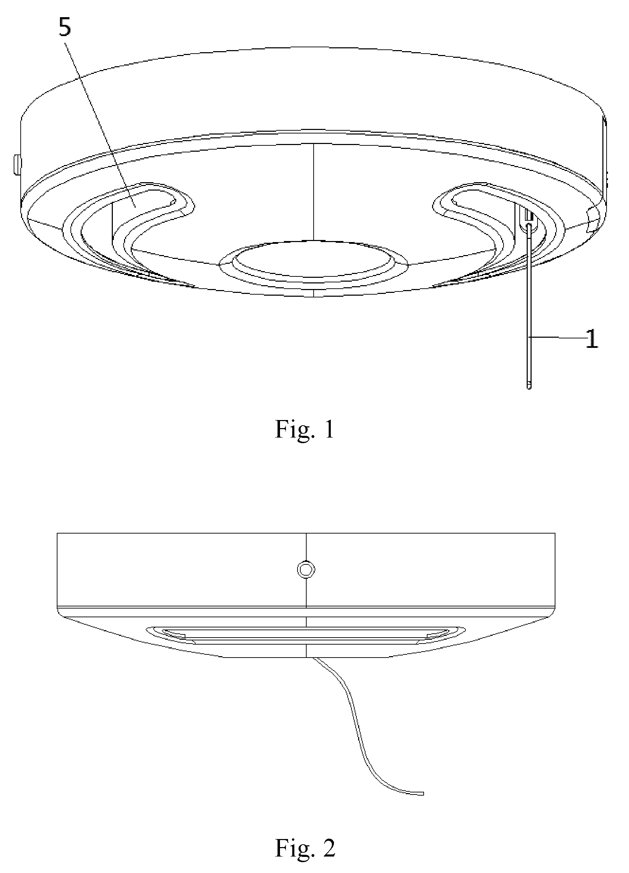

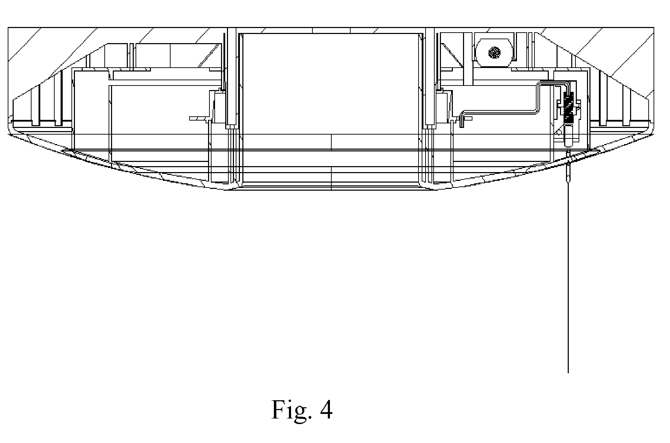

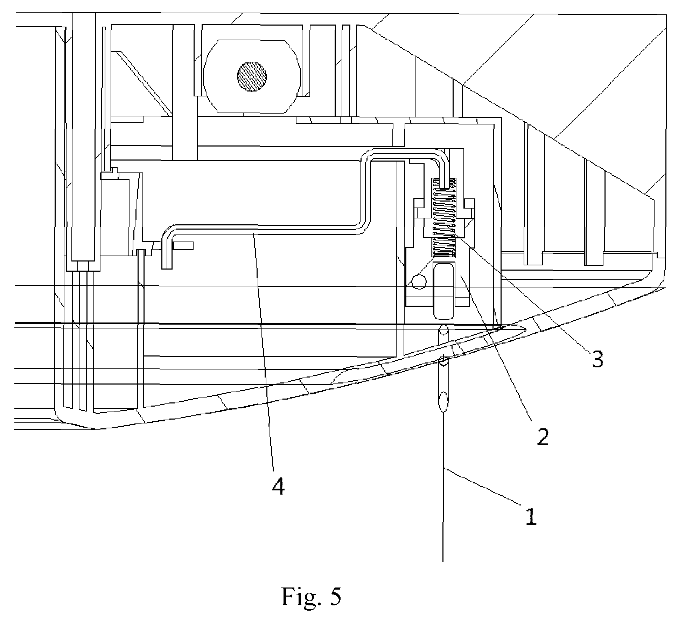

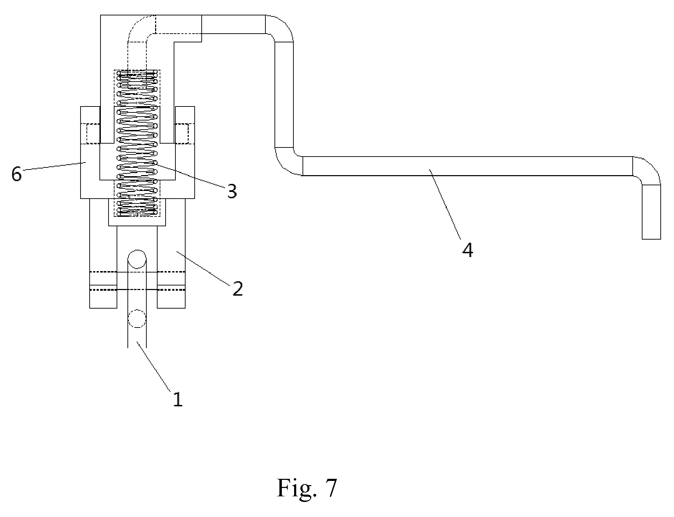

Referring to Fig. 1 to Fig. 7, a pet toy, the pet toy is provided with a center turnplate, wherein the center turnplate is radially equipped with a rotating arm 4 outward in a fixed way, the lower portion of the terminal of the rotating arm 4 is connected with a thread rope 1; the position of the lower portion of the housing of the pet toy corresponding to the vertical direction of the terminal treading track of the rotating arm 4 is provided with at least one arc-shaped slotted hole 5; the center turnplate drives the rotating arm 4 to rotate, the rotating arm 4 drives the thread rope 1 to rotate, and the exposed portion of the thread rope 1 stops rotating and retracts upwards when the thread rope 1 rotates to the terminal of the slotted hole.

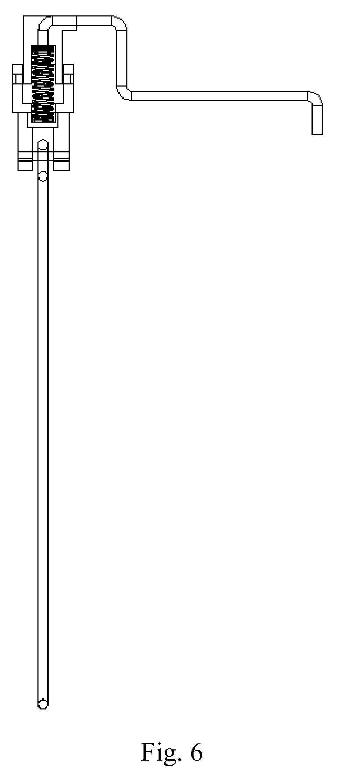

Referring to Fig. 6 to Fig. 7, the terminal of the rotating arm 4 is fixedly connected with an upper swaying block 6, the upper swaying block 6 is hinged with a lower swaying block 2, a spring 3 is arranged between the upper swaying block 6 and the lower swaying block 2, a stop block corresponding to the position of the lower swaying block 2 is arranged inside the pet toy, the lower swaying block 2 collides with the stop block when the rotating arm 4 rotates before the arc-shaped slotted hole 5, the lower swaying block 2 rotates along hinge joint, and the spring 3 is released to bounce the thread rope 1 out of the arc-shaped slotted hole 5.

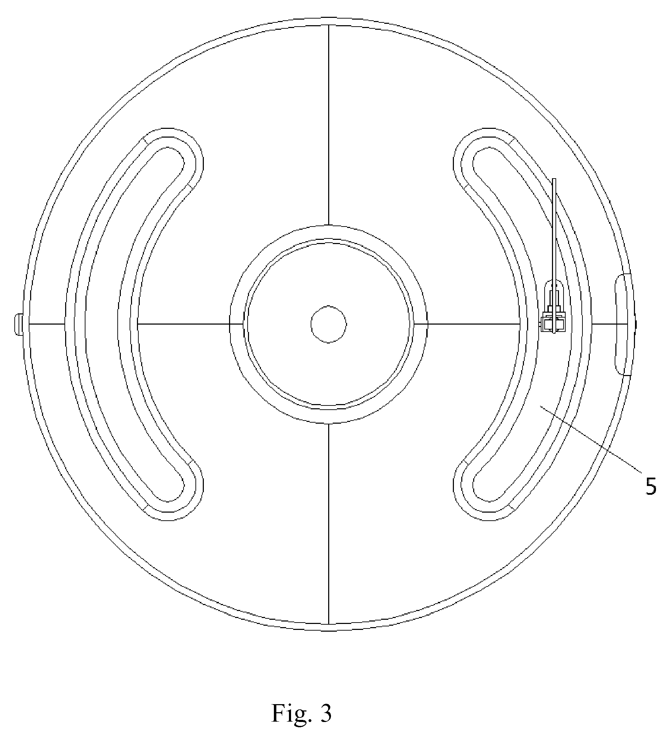

Referring to Fig. 3, pluralities of arc-shaped slotted holes 5 are provided and arranged at equal angles in the circle direction.

The center turnplate is driven by a motor, and the motor controls the rotation direction and duration via a set program.

The pet toy is fixed in a suspended way.

The pet toy is supported via a support object in the middle of the bottom surface thereof to fix in the suspended way.

The toy provided by the embodiment belongs to an electric rope type toy, with main features that: 1. the toy cannot only be fixed on the door, the wall surface, the lower surface of a desk, a cat tree and other positions, but also be placed on the floor. 2. The toy is driven by a battery and a motor drives a rope to implement the circular motion in a sliding chute via a transmission mechanism.3. The front of the toy is opened with a plurality of semi-circular openings. A popping mechanism drives the rope to pop up when the rope rotates to the opening.4. The opening at the opening can randomly rotate or remain clockwise or counterclockwise to attract the pet's attention; when rotating the opening, the rope is accommodated inside the toy. The rope is hidden in appearance and its hiding duration is random. 5. The toy is provided with a speed regulation switch, the rotation speed of the rope can be regulated via the speed regulation switch and it can be either speeded up or slowed down, or opened or closed. 6. The number and size of the openings on the structure of the toy can be regulated according to the specific size and design requirement of the toy. 7. The toy is divided into two versions on power supply, one of which is that the power is supplied by a dry battery, and the battery is replaced by opening a battery compartment after exhausting; and the other of which is that a built-in chargeable battery is adopted, and a charger is inserted for charge after exhausting.

### Second embodiment:

A pet toy, with the difference from the first embodiment that the thread rope 1 is a rigid structure and the arc-shaped slotted hole 5 faces upward.

The pet toy can automatically lead the thread rope to implement corresponding actions of rotation and extension-retraction so as to attract pet's attention to play; the rotation direction and duration of the center turnplate can be automatically controlled via a built-in program; the attention to the pet is so stronger that the pet toy is particularly suitable for pet cats.

### Third embodiment:

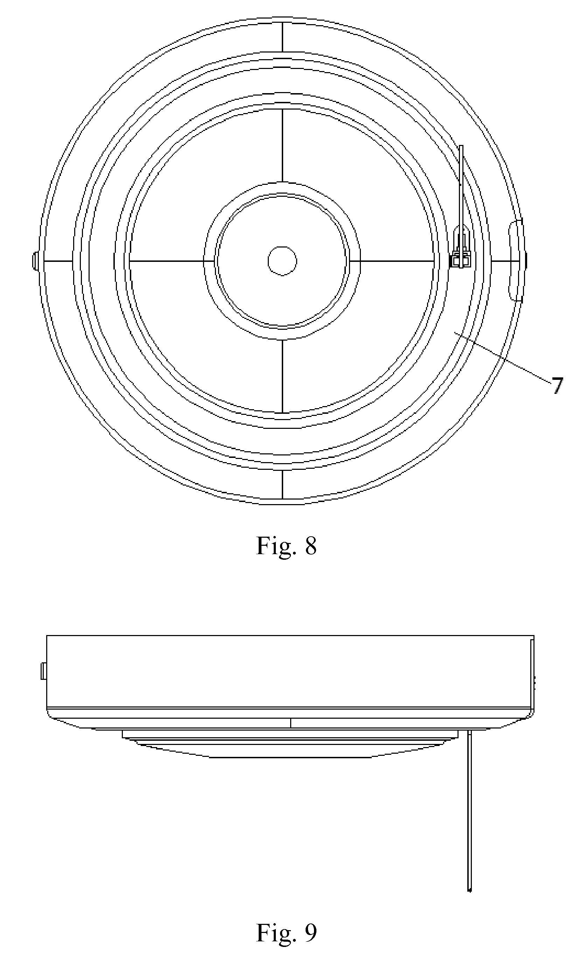

Referring to Fig. 8 and Fig. 9, a pet toy, the pet toy is provided with a center turnplate, the center turnplate is radially equipped with a rotating arm outward in a fixed way, and the lower portion of the terminal of the rotating arm is connected with a thread rope; the position of the lower portion of the housing of the pet toy corresponding to the vertical direction of the terminal treading track of the rotating arm is provided with a circular ring hole 7; and the center turnplate drives the rotating arm to rotate, and the rotating arm drives the thread rope to rotate in the circular ring hole 7.

In summary, the invention relates to a pet toy, belonging to the technical field of the pet toys. A pet toy is disclosed which is provided with a center turnplate, wherein the center turnplate is radially equipped with a rotating arm 4 outward in a fixed way, the lower portion of the terminal of the rotating arm 4 is connected with a thread rope 1; the position of the lower portion of the housing of the pet toy corresponding to the vertical direction of the terminal treading track of the rotating arm 4 is provided with at least one arc-shaped slotted hole 5; the center turnplate drives the rotating arm 4 to rotate, the rotating arm 4 drives the thread rope 1 to rotate, and the exposed portion of the thread rope 1 stops rotating and retracts upwards when the thread rope 1 rotates to the terminal of the slotted hole. The pet toy can automatically lead the thread rope to implement corresponding actions of rotation and extension-retraction so as to attract pet's attention to play; the rotation direction and duration of the center turnplate can be automatically controlled via a built-in program; the attention to the pet is so stronger that the pet toy is particularly suitable for pet cats.

## Claims

1. A pet toy, wherein:
the pet toy is provided with a center turnplate, the center turnplate is radially equipped with a rotating arm (4) outward in a fixed way, the lower portion of the terminal of the rotating arm (4) is connected with a thread rope (1);
the position of the lower portion of the housing of the pet toy corresponding to the vertical direction of the terminal treading track of the rotating arm (4) is provided with at least one arc-shaped slotted hole (5);
the center turnplate drives the rotating arm (4) to rotate, the rotating arm (4) drives the thread rope (1) to rotate, the exposed portion of the thread rope (1) stops rotating and retracts upwards when the thread rope (1) rotates to the terminal of the slotted hole; and
the thread rope (1) extends up and down in the arc-shaped slotted hole (5).

2. The pet toy according to claim 1, wherein
the terminal of the rotating arm (4) is fixedly connected with an upper swaying block (6), the upper swaying block (6) is hinged with a lower swaying block (2), and a spring (3) is arranged between the upper swaying block (6) and the lower swaying block (2);
a stop block corresponding to the position of the lower swaying block (2) is arranged inside the pet toy, the lower swaying block (2) collides with the stop block when the rotating arm (4) rotates before the arc-shaped slotted hole (5), the lower swaying block (2) rotates along hinge joint, and the spring (3) is released to bounce the thread rope (1) out of the arc-shaped slotted hole (5).

3. The pet toy according to claim 1 or 2, wherein pluralities of arc-shaped slotted holes (5) are provided and arranged at equal angles in the circle direction.

4. The pet toy according to one of the preceding claims, wherein the center turnplate is driven by a motor, and the motor controls the rotation direction and duration via a set program.

5. The pet toy according to one of the preceding claims, wherein the pet toy is fixed in a suspended way.

6. The pet toy according to one of the preceding claims, wherein the pet toy is supported via a support object in the middle of the bottom surface thereof to fix in the suspended way.

7. The pet toy according to one of the preceding claims, wherein differences from that of claim 1, the thread rope (1) is an elastic rigid structure and the arc-shaped slotted hole (5) faces upward.

8. A pet toy, wherein:
the pet toy is provided with a center turnplate, the center turnplate is radially equipped with a rotating arm outward in a fixed way, and the lower portion of the terminal of the rotating arm is connected with a thread rope;
the position of the lower portion of the housing of the pet toy corresponding to the vertical direction of the terminal treading track of the rotating arm is provided with a circular ring hole (7); and
the center turnplate drives the rotating arm to rotate, and the rotating arm drives the thread rope to rotate in the circular ring hole (7).
